# EUROPÄISCHE PATENTANMELDUNG

(11) **EP 1 375 398 A2**
(43) Veröffentlichungstag der Anmeldung: **02.01.2004**
(21) Anmeldenummer: 03012641.1
(22) Anmeldetag: 04.06.2003
(51) Int. Cl.: B65G 65/48

(54) **Silo-Austragvorrichtung**

(30) Priorität: 21.06.2002 DE 10227924
(71) Anmelder: Schwäbische Hüttenwerke GmbH, 73430 Aalen-Wasseralfingen (DE)
(72) Erfinder: Ruf, Klaus, 73441 Bopfingen-Aufhausen (DE); Brehm, Horst, 73492 Rainau-Schwabsberg (DE); Wawronowicz, Jan, 73433 Aalen-Wasseralfingen (DE); Schröder, Klaus-Sweerich, 73431 Aalen (DE)
(74) Vertreter: Riedel, Peter, Dipl.-Ing.

(57) **Zusammenfassung**

Die Erfindung betrifft eine Silo-Austragvorrichtung mit einem im Silo (1) befindlichen Rotor (2), an dem mindestens ein Räumarm (3) befestigt ist. Der Räumarm (3) weist ein Blattfederpaket (4) mit aneinander liegenden Blattfedern auf. Mindestens eine Blattfeder ist als Kunststoffblattfeder ausgebildet.

## Beschreibung

Die Erfindung betrifft eine Silo-Austragvorrichtung mit den Merkmalen nach dem Oberbegriff des Anspruchs 1.

Silos zur Lagerung von Schüttgut wie Futtermittel oder Baustoffe weisen im Bodenbereich ein oder mehrere Transportorgane zur Entnahme des Schüttgutes aus dem Silo-Behälter auf. Den beispielsweise als Förderschnecken ausgebildeten Transportorganen wird das zu entnehmende Schüttgut vorrangig auf die darauf einwirkende Gewichtskraft zugeführt. Dabei sackt das im Silo befindliche Schüttgut in dem Maße von oben in Gewichtskraftrichtung nach, wie es im unteren Bodenbereich entnommen wird. Abhängig von der Beschaffenheit des Schüttgutes und der Füllhöhe im Silo kann es zu einem diskontinuierlichen Nachsacken kommen. Es können sich in unerwünschter Weise im Bereich der Entnahmeöffnungen für die Transportorgane gewölbeartige Hohlräume bilden, wodurch der Austragevorgang unterbrochen ist. Auch kann auf dem Siloboden abseits der Entnahmeöffnung lagerndes Schüttgut nicht ohne weiteres zu den Transportorganen gelangen.

Aus der EP 0 529 113 B1 ist beispielsweise eine Silo-Austragvorrichtung bekannt, bei der ein im Silo angeordneter Rotor mit Räumarmen vorgesehen ist. Durch Drehung des Rotors mit den im Bodenbereich angeordneten Räumarmen können sich eventuell bildende Schüttgutbrücken oder -gewölbe zum Einsturz gebracht werden. Auch kann auf dem Siloboden abgelagertes Schüttgut den Entnahmeöffnungen bzw. Transportschnecken zugeführt werden. Für eine gute Räumwirkung und zur Vermeidung von Überlastungen der Vorrichtung sind die Räumarme im wesentlichen als Blattfederpakete mit aneinander liegenden Blattfedern ausgebildet. Bei hoher Widerstandskraft im Schüttgut legen sich die federelästischen Räumarme gegen die Drehrichtung des Rotors nahe an die Nabe des Rotors an. In diesem Zustand findet eine Schüttguträumung nur im Nabenbereich statt. Mit fortschreitender Räumung und damit geringer werdendem Widerstand an dem Räumarmen entspannen sich die Blattfederpakete. Die Außenbereiche der Räumarme überstreichen dabei eine Kreisfläche mit zunehmendem Radius. Der dabei durch den Räumvorgang gebildete kreisförmige Hohlraum wächst dabei in radialer Richtung solange, bis der durch die Gewichtskraft im Schüttgut verursachte Druck diesen Hohlraum zum Einsturz bringt. Ein zuverlässiges Nachsacken des Schüttgutes ist dadurch sichergestellt.

Abhängig von der Beschaffenheit des Schüttgutes können sich im Blattfederpaket eines Räumarmes sehr unterschiedliche Biegeradien einstellen. Dementsprechend verschieben sich die einzelnen Blattfedern im Blattfederpaket in unter Umständen erheblichen Maßen. Zur Vermeidung von übermäßigem Verschleiß ist eine zuverlässige Schmierung zwischen den gegeneinander reibend verschieblichen Blattfedern erforderlich. Zwischen den Blattfedern sich ablagernde Schüttgutartikel können neben erhöhter Reibung auch zu einer Aufdickung des Blattfederpaketes führen. Dies kann zu einem Verklemmen der Blattfedern gegeneinander und auch gegenüber einem die Blattfedern umschließenden Federbügel führen. Am äußeren freien Ende eines Räumarmes ist ein Befestigungsschuh für ein Räumwerkzeug vorgesehen, der die Enden von mehreren Blattfedern umschließt. Zur Sicherstellung der biegeabhängigen Verschieblichkeit der Blattfedern gegeneinander ist der Befestigungsschuh an nur einer Blattfeder festgelegt, wobei die übrigen Blattfederenden abhängig vom Biegeradius mehr oder weniger weit in den Befestigungsschuh hineingleiten. Schüttgutartikel, die sich in diesem Bereich absetzten und zu einer Aufdickung des Blattfederpaketes führen, können die Verschieblichkeit der Blattfedern gegeneinander so weit beeinträchtigen, daß es bei mangelhafter Wartung zu erhöhtem Verschleiß oder sogar zu einem Bruch der Blattfedern kommt.

Der Erfindung liegt die Aufgabe zugrunde, eine Silo-Austragvorrichtung derart weiterzubilden, daß ihre Funktionssicherheit bei verringertem Wartungsaufwand verbessert ist.

Die Aufgabe wir durch eine Silo-Austragvorrichtung mit den Merkmalen des Anspruchs 1 gelöst.

Dazu wird vorgeschlagen, im Blattfederpaket eines Räumarmes mit aneinanderliegenden, Stahlblattfedern umfassenden Blattfedern mindestens eine Blattfeder als Kunststoffblattfeder auszuführen. Eine derartige Kunststoffblattfeder kann beispielsweise im Außenbereich des Blattfederpaketes angeordnet sein, wobei die Kunststoffblattfeder bei einer durchbiegungsbedingten Längsverschiebung gegenüber einer benachbarten Stahlblattfeder sowie gegenüber das Blattfederpaket umschließenden Feder- bzw. Haltebügeln oder einem Befestigungsschuh für ein Räumwerkzeug gleitet. Die im Vergleich zu Stahl erheblich besseren Gleiteigenschaften des Kunststoffmaterials einer Blattfeder führen zu einem geringeren Wartungsaufwand insbesondere hinsichtlich der Schmierung. Bei geeigneter Auswahl des Kunststoffmaterials kann ggf. auf eine zusätzliche Schmierung verzichtet werden. Aus der Kombination von Stahlblattfedern mit mindestens einer Kunststoffblattfeder ergibt sich ein guter Kompromiß zwischen notwendiger Federsteifigkeit und dauerhaft guten Gleiteigenschaften. Die vergleichsweise geringe Oberflächenhärte einer Kunststoffblattfeder erlaubt es, kleine Partikel aufzunehmen und einzulagern. Dadurch ist eine unerwünschte Aufdickung des Federpaketes durch eingelagerte Schüttgutpartikel und ein damit einhergehendes Verklemmen des Federpaketes vermieden.

In bevorzugter Weiterbildung ist zwischen zwei Stahlblattfedern jeweils eine Kunststoffblattfeder angeordnet. Beide Oberflächen der Kunststoffblattfeder wirken dabei als Gleitbahn einer jeweils anliegenden Stahlfeder, wodurch anteilig mehr Stahlblattfedern als Kunststoffblattfedern ohne Beeinträchtigung der guten Gleiteigenschaften eingesetzt werden können. Der geringere E-Modul des Kunststoffmaterials kann dabei ohne weiteres durch entsprechende Dimensionierung der Stahlblattfedern ausgeglichen werden. Insbesondere hat sich dabei eine Stapelfolge im Blattfederpaket als zweckmäßig herausgestellt, bei der auf zwei Stahlblattfedern jeweils eine Kunststoffblattfeder folgt, bei der also jede dritte Blattfeder als Kunststoffblattfeder ausgebildet ist. Bei einer derartigen Stapelfolge sind gute Gleiteigenschaften mit geringem Verschleiß zusammen mit hinreichender Federsteifigkeit erzielbar.

Bei einer Ausbildung des Räumarmes mit einem Befestigungsschuh für ein Räumwerkzeug, der an einem freien Ende des Blattfederpaketes zumindest einen Teil der Blattfedern umgreift, ist in vorteilhafter Weiterbildung der Befestigungsschuh an der in Drehrichtung des Rotors vorderen Blattfeder festgelegt. Die in Drehrichtung vordere Blattfeder ist beim Räumvorgang direkt dem Schüttgut ausgesetzt. Durch die Festlegung des Befestigungsschuhes an dieser vorderen Blattfeder findet zwischen beiden Bauteilen in diesem verschmutzungsgefährdeten Bereich keine Relativbewegung statt. Die weiter hinten liegenden, abhängig vom Krümmungsradius des Blattfederpaketes mehr oder weniger weit in den Befestigungsschuh hineingleitenden Blattfedern sind durch die vordere Blattfeder abgedeckt. Die Gleitreibungspaarungen in dem bezogen auf die Drehrichtung hinteren Blattfederbereich unterliegen damit einer verringerten Verschmutzungs- und damit Verschleißgefährdung.

Zur Vermeidung eines Aufspreizen eines Federpaketes zwischen dem inneren Nabenteil und dem äußeren freien Ende mit dem Befestigungsschuh sind das Blattfederpaket umschließende Federbügel zum Gegeneinanderdrücken der einzelnen Blattfedern vorgesehen. Zur Sicherstellung einer dauerhaften Positionierung der Federbügel ohne Beeinträchtigung der gegenseitigen Verschieblichkeit der einzelnen Blattfedern sind Distanzmittel insbesondere in Form einer die Federbügel miteinander verbindenden Kette vorgesehen, mittels derer die Federbügel in Position gehalten sind. Die Kette hält dabei die Federbügel in Längsrichtung des Federpaketes zuverlässig in Position, ohne dabei die Federsteifigkeit des Federpaketes nachteilig zu beeinflussen. Zur Vermeidung eines Spannungsverlustes in den Distanzmitteln bzw. in der Kette sind zwischen zwei Federbügeln mindestens ein Haltebügel für die Distanzmittel vorgesehen. Auch bei starker Krümmung des Federpaketes folgt dadurch die Kette zumindest in etwa der Kontur des durchgebogenen Räumarmes. Auch bei entsprechend ausgeprägten Krümmungsradien kann die gegenseitige Verschiebung der einzelnen Blattfedern nicht zu einer Verschiebung der Federbügel und der Haltebügel führen. Insbesondere sind dabei die Distanzmittel an den Federbügeln und, sofern vorhanden, an den Haltebügeln im Bereich der vorderen Blattfeder festgelegt. In Verbindung mit dem an der vorderen Blattfeder festgelegten Befestigungsschuh für ein Räumwerkzeug folgt dabei die Kette oder ein vergleichbares Distanzmittel in etwa der Kontur der sich krümmenden Blattfeder und wegen des Fehlens einer Längsverschieblichkeit des Befestigungsschuhes relativ zu dieser Blattfeder bleibt eine in der Kette eingestellte Vorspannung auch bei unterschiedlichen Krümmungsradien erhalten. Die Positionierung der Federbügel und ggf. der Haltebügel mittels der genannten Distanzmittel ohne weitere Festlegung direkt an freien Enden von kürzerern Blattfedern erlaubt es, eine Vielzahl von Blattfedern von der Nabe des Rotors bis nach außen zum Befestigungsschuh zu führen. Die geringere Federsteifigkeit der Kunststoffblattfeder kann dabei ohne weiteres durch eine Anzahl längerer Stahlblattfedern ausgeglichen werden.

Als geeignete Materialien für die Kunststoffblattfedern haben sich Kunststoffe herausgestellt, deren Gleitverschleiß höchstens 0,5 Mikrometer/Kilometer und/oder die eine Gleitreibungszahl von höchstens 0,15 aufweisen. Insbesondere eignet sich dazu ggf. mit Glasfasern verstärktes Polyester, Hochdruckpolyethylen oder PTFE (Polytetraflourethylen, Handelsname Teflon).

Ein Ausführungsbeispiel der Erfindung ist im Folgenden anhand der Zeichnung näher beschrieben. Es zeigen:
- Fig. 1: eine Querschnittsdarstellung durch ein Silo mit einer Silo-Austragvorrichtung nach dem Stand der Technik,
- Fig. 2: eine Seitenansicht der Anordnung nach Fig. 1,
- Fig. 3: eine Prinzipdarstellung eines Blattfederpaketes einer erfindungsgemäßen Silo-Austragvorrichtung mit Kunststoff- und Stahlblattfedern,
- Fig. 4: eine Detailansicht der Anordnung nach Fig. 3 im Bereich ihres freien Endes mit aufgesetztem Befestigungsschuh, Federbügel, Haltebügel und dazwischenliegender Distanzkette,
- Fig. 5: eine Detailansicht der Anordnung nach Fig. 3 im Bereich des nabenseitigen Endes,
- Fig. 6: eine Frontalansicht eines Räumarmes mit einem Blattfederpaket nach Fig. 3 und aufgesetzten Federund Haltebügeln.

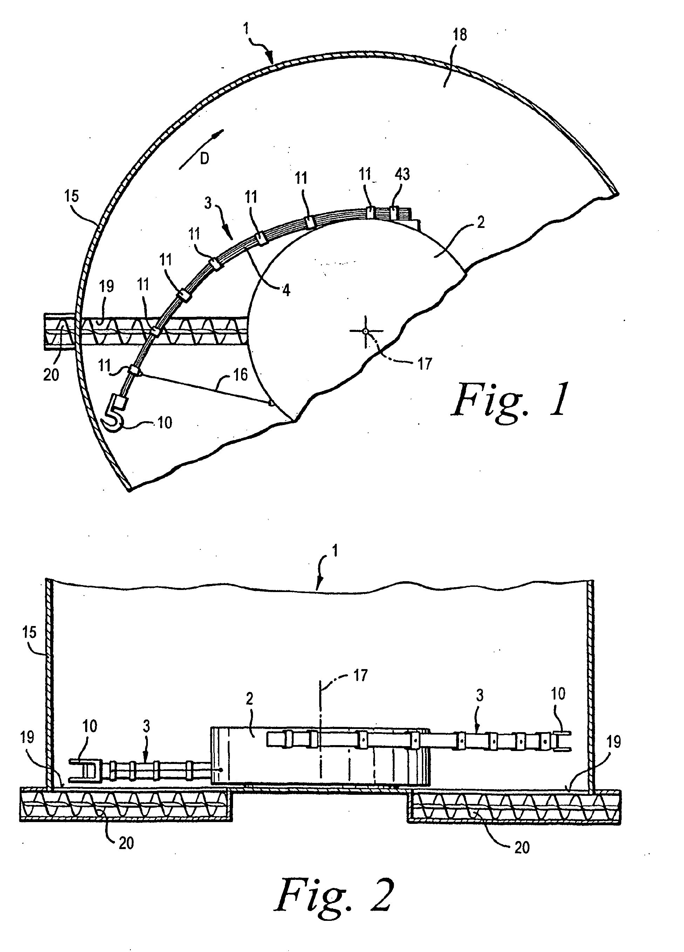

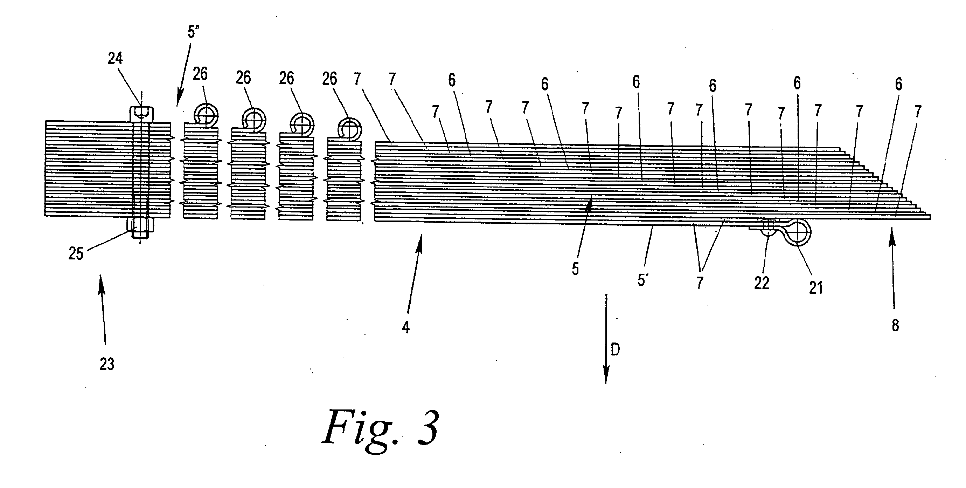

Die Fig. 1 und 2 zeigen in einer Querschnittsdarstellung bzw. einer Längsschnittdarstellung einen Silo 1 mit einem etwa zylindrischen Mantel 15, der nach unten durch einen kreisscheibenförmigen Siloboden 18 abgeschlossen ist. Eine Silo-Austragvorrichtung umfaßt einen Rotor 2, an dem ein Räumarm 3 mit einem Blattfederpaket 4 festgelegt ist. Der Räumarm 3 ist mittels einer Halteklammer 43 am Rotor 2 festgelegt. Am freien Ende 8 (Fig. 8) des Räumarmes 3 ist ein hakenförmiges Räumwerkzeug 10 vorgesehen. Der Rotor 2 mit dem Räumarm 3 ist um eine Drehachse 17 in Drehrichtung D drehend antreibbar. Das Blattfederpaket 4 ist durch Zugmittel 16 in Form eines Seiles oder einer Kette gegen die Drehrichtung D derart vorgespannt, daß das Räumwerkzeug 10 im unbelasteten Zustand einen geringen Abstand zum Mantel 15 des Silos 1 aufweist. Das Blattfederpaket 4 ist durch eine Anzahl von Federbügeln 11 umschlossen, wobei das Zugmittel 16 zwischen einem Federbügel 11 und dem Rotor 2 gespannt ist.

Bei beginnendem Drehvorgang des Rotors 2 drückt der Räumarm 3 gegen ein nicht näher dargestelltes, im Silo 1 bevorratetes Schüttgut. Die auftretenden Druckkräfte drücken den federelastischen Räumarm 3 gegen die Drehrichtung D nahe an den Rotor 2. Der Räumarm 3 und das Räumwerkzeug 10 räumen dabei Schüttgut im Bereich des Rotors 2 zu einer radial im Siloboden 18 sich erstreckenden Öffnung 19, aus der es mittels einer Förderschnecke 20 entnommen wird. Mit fortschreitender Räumung des Schüttgutes entspannt sich das Blattfederpaket 4 des Räumarmes 3, wodurch das Räumwerkzeug 10 radial nach außen wandert und auch in diesem Bereich eine Räumung des Schüttgutes vornimmt. Sich eventuell bildende Brücken oder Hohlräume im Schüttgut werden dabei durch den Räumarm 3 zum Einsturz gebracht. Auf dem Siloboden 18 lagerndes Schüttgut wird mittels des Räumarmes 3 zur Öffnungen 19 gefördert und der Förderschnecke 20 zugeführt.

Fig. 3 zeigt in einer schematischen Darstellung ein Blattfederpaket 4 eines Räumarmes 3 nach den Fig. 1 und 2 in erfindungsgemäßer Ausführung. Das Blattfederpaket 4 weist Blattfedern 5, 5', 5" auf, die Kunststoffblattfedern 6 und Stahlblattfedern 7 umfassen. Die bezogen auf die Drehrichtung D vordere Blattfeder 5' ist im Bereich des freien Endes 8 des Blattfederpaketes 4 mit einer Öse 21 versehen. Die Öse 21 ist durch Biegen der vorderen Blattfeder 5' und Vernieten mit Nieten 22 gebildet. Im Bereich des rotornahen Endes 23 des Blattfederpaketes 4 sind die Blattfedern 5, 5', 5" von einer Schraube 24 durchgriffen, wobei die Schraube 24 und eine aufgesetzte Mutter 25 die Blattfedern 5, 5', 5" verrutschungssicher gegeneinander verspannen. Im Bereich des freien Endes 8 sind die Blattfedern 5, 5', 5" abhängig vom Biegeradius des Blattfederpaketes 4 gegeneinander gleitend verschieblich. Die bezogen auf die Drehrichtung D hinter der vorderen Blattfeder 5' liegende Stahlblattfeder 7 endet im Bereich der Öse 21. Weitere Blattfedern 5 sind länger als die vorderen Blattfedern 5' ausgeführt und in ihrer Länge abgestuft. Ein weiterer Teil von bezogen auf die Drehrichtung D hinten liegenden Blattfedern 5" enden im Bereich zwischen dem rotornahen Ende 23 und dem freien Ende 8 des Blattfederpaketes 4 und weisen in diesem Bereich eine durch Einrollen gebildete Windung 26 auf.

Die bezogen auf die Drehrichtung D vordere Blattfeder 5' sowie die kürzeren Blattfedern 5" sind als Stahlblattfedern 7 ausgeführt. Die weiteren, bis in den Bereich des freien Endes 8 reichenden Blattfedern 5 sind teilweise als Kunststoffblattfedern 6 und teilweise als Stahlblattfedern 7 ausgebildet, dabei ist eine Stapelfolge gewählt, bei der auf zwei Stahlblattfedern 7 eine Kunststoffblattfeder 6 folgt. Zwischen zwei Stahlblattfedern 7 liegt dabei eine Kunststoffblattfeder 6. Es kann auch eine Stapelfolge zweckmäßig sein, bei der die vordere Blattfeder 5' als Kunststoffblattfeder 6 oder die hintere, bis in den Bereich des freien Endes 8 reichende Blattfeder 5 als Kunststoffblattfeder 6 ausgebildet ist. Ebenfalls kann es zweckmäßig sein, jede zweite Blattfeder 5 als Kunststoffblattfeder 6 auszuführen oder ein anderes geeignetes anteiliges Verhältnis von Kunststoffblattfedern 6 und Stahlblattfedern 7 zu wählen.

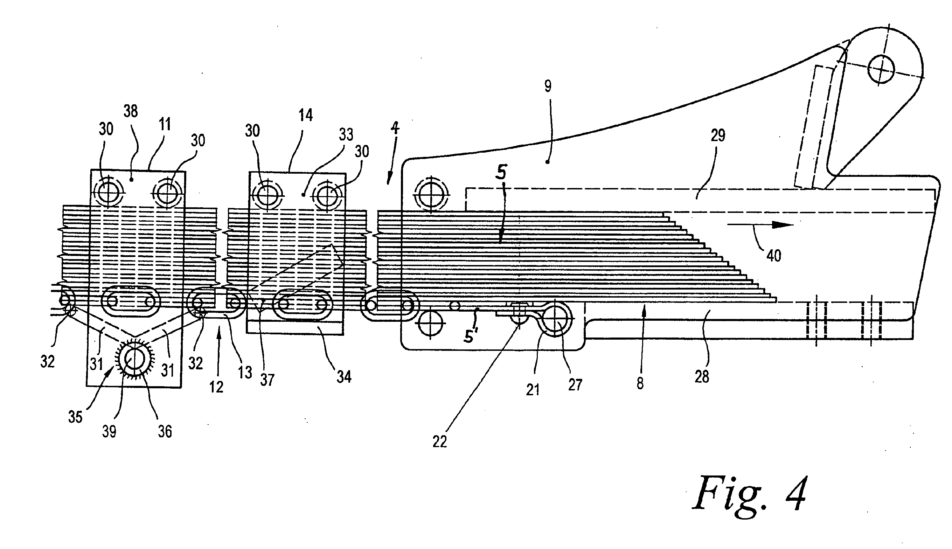

Fig. 4 zeigt eine Detailansicht eines Räumarmes 3 (Fig. 1 und 2) im Bereich des freien Endes 8 eines Blattfederpaketes 4 nach Fig. 3. Wie dieser Darstellung zu entnehmen ist, können die Kunststoffblattfedern eine geringere Dicke aufweisen als die Stahlblattfedern. Für die Bemessung der Dicke der Kunststoffblattfedern 6 ist zu berücksichtigen, daß diese ausreichend sein soll, um ein Reißen mit Sicherheit zu vermeiden. Andererseits ist darauf zu achten, daß nicht unnötig Raum benutzt wird, der für die Stahlblattfedern erforderlich ist. Als für die Praxis brauchbare Bemessung wird eine Dicke von 2 mm oder größer angesehen. Der bis zu dem freien Ende 8 reichende Teil der Blattfedern 5 ist im Bereich des freien Endes 8 von einem Befestigungsschuh 9 für ein Räumwerkzeug 10 (Fig. 1 und 2) umgriffen. Dabei liegen die Blattfedern 5 gleitend zwischen einer vorderen und einer hinteren Platte 28, 29 des Befestigungsschuhes 9. Der Befestigungsschuh 9 ist mittels eines die Öse 21 der vorderen Blattfeder 5' durchgreifenden Bolzens 27 am Blattfederpaket 4 festgelegt. Die vordere Blattfeder 5' ist dadurch gegenüber dem Befestigungsschuh 9 unverschieblich. Die bezogen auf die Drehrichtung D weiter hinten liegenden Blattfedern 5 schieben sich bei einer Durchbiegung des Blattfederpaketes 4 in Richtung des Pfeiles 40 in den Befestigungsschuh 9 hinein. Der Tatsache, daß die gleitende Einschubbewegung der Blattfedern 5 mit größerem Abstand einer einzelnen Blattfeder 5 zur vorderen, festgelegten Blattfeder 5' größer wird, ist durch die abgestufte Länge der Blattfedern 5 Rechnung getragen.

Die das Blattfederpaket 4 umschließenden und in regelmäßigen Abständen zueinander angeordneten Federbügel 11 (Fig. 1 und 2) sind zum Gegeneinanderdrücken der einzelnen Blattfedern 5, 5' mit Schenkelfedern 35 versehen. Im gezeigten Ausführungsbeispiel weisen dabei die Federbügel 11 zwei seitliche Platten 38 auf, die durch Bolzen 30 und einen Zapfen 39 miteinander verbunden sind. Die Schenkelfeder 35 ist von dem Zapfen 39 gehalten, wobei zwei Schenkel 31 mit Abwinkelungen 32 unter Vorspannung die Blattfedern 5, 5' gegeneinander und gegen die Bolzen 30 drücken. Zwischen den einzelnen Federbügeln 11 sowie im Außenbereich des Räumarmes 3 zwischen dem Federbügel 11 und dem Befestigungsschuh 9 ist jeweils ein Haltebügel 14 angeordnet. Der Haltebügel 14 ist U-förmig ausgebildet mit zwei seitlichen Wangen 33 und einem Boden 34. Im Bereich der dem Boden 34 gegenüberliegenden offenen Seite des Haltebügels 14 sind zwei Bolzen 30 durch die beiden Wangen 33 hindurchgeführt. Die Federbügel 11 und die Haltebügel 14 sind relativ zum Rotor 2 (Fig. 1 und 2) und zum Befestigungsschuh durch Distanzmittel 12 in Position gehalten. Die Distanzmittel 12 sind im gezeigten Ausführungsbeispiel als Kette 13 ausgebildet. Es kann jedoch auch ein Stahlseil oder dergleichen vorgesehen sein. Die Kette 13 ist am Befestigungsschuh 9, an den Federbügeln 11, den Haltebügeln 14 und an dem Rotor 2 (Fig. 1 und 2) im Bereich der vorderen Blattfeder 5' durch Verschweißen festgelegt.

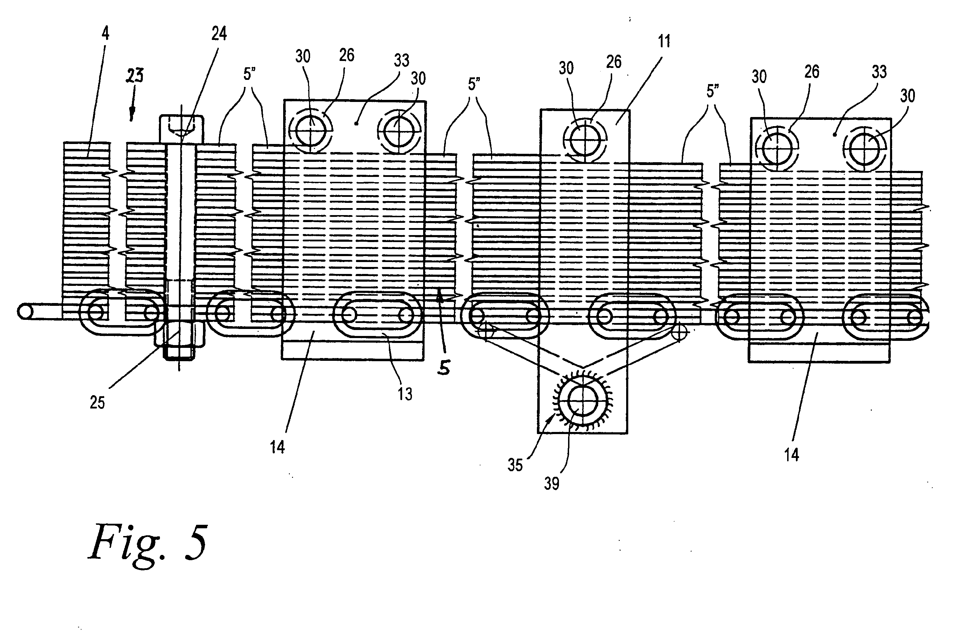

Nach Fig. 5 sind im Bereich des rotornahen Endes 23 des Blattfederpaketes 4 nach Fig. 3 alternative Ausführungen der Federbügel 11 und der Haltebügel 14 vorgesehen. Im gezeigten Ausführungsbeispiel des Federbügels 11 ist auf der dem Zapfen 39 und der Schenkelfeder 35 gegenüberliegenden Seite nur ein einzelner Bolzen 30 vorgesehen, der eine Windung 26 einer verkürzten Blattfeder 5" durchgreift. Beim gezeigten Ausführungsbeispiel der Haltebügel 14 durchgreift ebenfalls ein Bolzen 30 jeweils eine Windung 26 einer verkürzten Blattfeder 5". Dadurch sind die Federbügel 11 und die Haltebügel 14 in Längsrichtung des Blattfederpaketes 4 gehalten. Auf eine Festlegung der Kette 13 an den Federbügeln 11 bzw. Haltebügeln 14 kann dabei verzichtet werden.

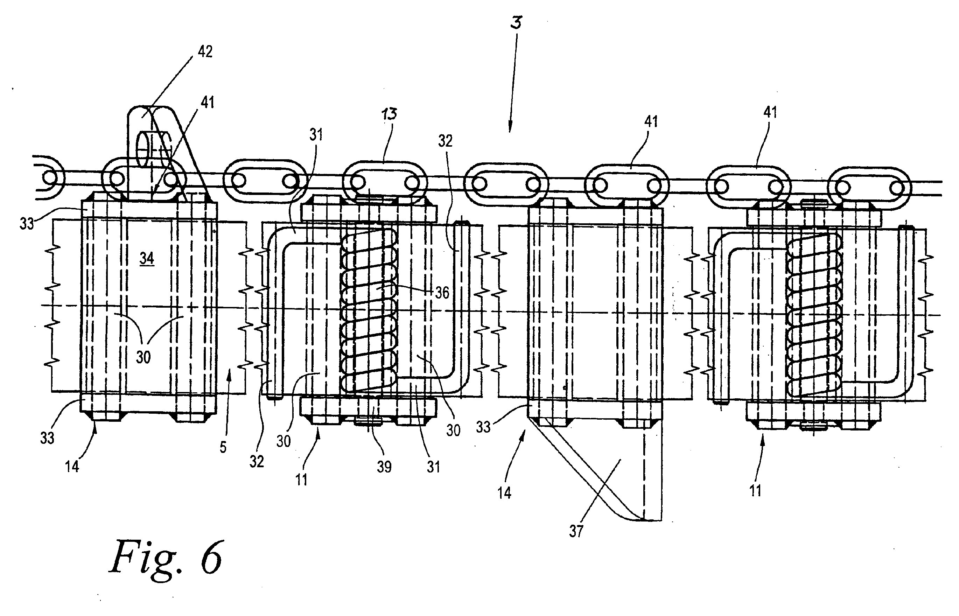

Fig. 6 zeigt in einer Vorderansicht Einzelheiten des Räumarms 3 nach den Fig. 3 bis 5. Einzelne Kettenglieder 41 der Kette 13 sind auf der Oberseite der Federbügel 11 bzw. der Haltebügel 14 festgeschweißt. An einem Haltebügel 14 ist ebenfalls auf der Oberseite ein Kettenauge 42 zur Befestigung von Zugmitteln 16 (Fig. 1) angeschweißt. Das Kettenauge 42 kann auch an einem Federbügel 11 festgelegt sein. Auf der dem Siloboden 18 (Fig. 1) zugewandten Unterseite eines weiteren Haltebügels 14 ist eine Gleitkufe 37 zur Gewichtsentlastung des Räumarmes 3 vorgesehen. Die übrigen Merkmale und Bezugszeichen sind im Zusammenhang mit den Fig. 3 bis 5 beschrieben.

Das Kunststoffmaterial der Kunststoffblätter 6 (Fig. 3) weist einen Gleitverschleiß von höchsten 0,5 Mikrometer/Kilometer und eine Gleitreibungszahl von höchstens 0,15 auf. Dazu sind die Kunststoffblattfedern 6 aus insbesondere mit Glasfaser verstärktem Polyester, aus Hochdruckpolyethylen oder aus Polytetrafluorethylen.

## Patentansprüche

1. Silo-Austragvorrichtung mit einem im Silo (1) befindlichen Rotor (2), an dem mindestens ein Räumarm (3) befestigt ist, der ein Blattfederpaket (4) mit aneinander liegenden, Stahl-Blattfedern (7) umfassenden Blattfedern (5, 5') aufweist,
**dadurch gekennzeichnet, daß** mindestens eine Blattfeder (5) eine Kunststoffblattfeder (6) ist.

2. Silo-Austragvorrichtung nach Anspruch 1,
**dadurch gekennzeichnet, daß** zwischen zwei Stahlblattfedern (7) eine Kunststoffblattfeder (6) angeordnet ist.

3. Silo-Austragvorrichtung nach Anspruch 1 oder 2,
**dadurch gekennzeichnet, daß** zumindest ein Teil des Blattfederpaketes (4) eine Stapelfolge aufweist, bei der auf zwei Stahlblattfedern (7) eine Kunststoffblattfeder (6) folgt.

4. Silo-Austragvorrichtung nach einem der Ansprüche 1 bis 3,
**dadurch gekennzeichnet, daß** an einem freien Ende (8) des Blattfederpaketes (4) zumindest ein Teil der Blattfedern (5, 5') von einem Befestigungsschuh (9) für ein Räumwerkzeug (10) umgriffen ist, wobei der Befestigungsschuh (9) an der in Drehrichtung (D) des Rotors (2) vorderen Blattfeder (5') festgelegt ist.

5. Silo-Austragvorrichtung nach einem der Ansprüche 1 bis 4,
**dadurch gekennzeichnet, daß** das Blattfederpaket (4) umschließende Federbügel (11) zum Gegeneinanderdrücken der einzelnen Federn (5, 5') vorgesehen sind, wobei die Federbügel (11) durch Distanzmittel (12), insbesondere in Form einer die Federbügel (11) verbindenden Kette (13) in Position gehalten sind.

6. Silo-Austragvorrichtung nach Anspruch 5,
**dadurch gekennzeichnet, daß** zwischen zwei Federbügeln (11) mindestens ein Haltebügel (14) für die Distanzmittel (12) angeordnet ist.

7. Silo-Austragvorrichtung nach Anspruch 4 und Anspruch 5 oder 6,
**dadurch gekennzeichnet, daß** die Distanzmittel (12) an den Federbügeln (11) und ggf. an den Haltebügeln (14) im Bereich der vorderen Blattfeder (5') festgelegt sind.

8. Silo-Austragvorrichtung nach einem der Ansprüche 1 bis 7,
**dadurch gekennzeichnet, daß** das Kunststoffmaterial der Kunststoffblattfeder (6) einen Gleitverschleiß von höchstens 0,5 Mikrometer pro Kilometer aufweist.

9. Silo-Austragvorrichtung nach einem der Ansprüche 1 bis 8,
**dadurch gekennzeichnet, daß** das Kunststoffmaterial der Kunststoffblattfeder (6) eine Gleitreibungszahl von höchstens 0,15 aufweist.

10. Silo-Austragvorrichtung nach einem der Ansprüche 1 bis 9,
**dadurch gekennzeichnet, daß** die Kunststoffblattfeder (6) aus Polyester, insbesondere mit Glasfaser, aus Hochdruckpolyethylen oder aus PTFE ist.

11. Silo-Austragvorrichtung nach einem der Ansprüche 1 bis 10,
**dadurch gekennzeichnet, daß** die Kunststoffblattfeder (6) eine geringere Dicke aufweist als die Stahlblattfedern (7).

12. Silo-Austragvorrichtung nach Anspruch 11,
**dadurch gekennzeichnet, daß** die Kunststoffblattfeder (6) eine Dicke von mindestens 2 mm aufweist.
